# EUROPÄISCHE PATENTSCHRIFT

(11) **EP 0 663 081 B1**
(45) Veröffentlichungstag und Bekanntmachung des Hinweises auf die Patenterteilung: **11.12.1996**
(21) Anmeldenummer: 93921876.4
(22) Anmeldetag: 29.09.1993
(51) Int. Cl.: G05B 19/40, H02P 8/00

(54) **VERFAHREN ZUM STEUERN EINES SCHRITTMOTORS**
PROCESS FOR CONTROLLING A STEP MOTOR
PROCEDE DE COMMANDE D'UN MOTEUR PAS-A-PAS

(30) Priorität: 29.09.1992 EP 92116657
(43) Veröffentlichungstag der Anmeldung: 19.07.1995
(73) Patentinhaber: SIEMENS AKTIENGESELLSCHAFT, 80333 München (DE)
(72) Erfinder: BRASSEUR, Georg, A-1130 Wien (AT); NOICHL, Andreas, A-1150 Wien (AT); TREFALT, Manfred, A-1060 Wien (AT); TURBA, Roman, A-1190 Wien (AT)
(86) Internationale Anmeldenummer: EP9302646
(87) Internationale Veröffentlichungsnummer: WO9408279

(56) Entgegenhaltungen:
- EP-A- 0 360 099
- WO-A-89/07859
- DE-A- 2 721 240
- US-A- 4 518 907
- US-A- 4 734 847

## Beschreibung

Die Erfindung betrifft ein Verfahren zum Steuern eines Schrittmotors gemäß Oberbegriff von Anspruch 1.

Ein derartiges Verfahren ist bekannt aus der US-PS 42 80 084. Dort wird der aktuelle Schrittwinkel als Summe aus einem konstanten Grobschritt und einem Feinschritt gebildet, dessen Wert von Schritt zu Schritt steigt oder fällt und aus einem Speicher gelesen wird. Auf diese Weise wird der Lastwinkel (Differenzwinkel zwischen Feldvektor und Rotorstellung) und damit das Drehmoment trotz sich ändernder Rotorgeschwindigkeit auf seinem anfänglichen Maximalwert gehalten.

Der Erfindung liegt die Erkenntnis zugrunde, daß sich bei Beschleunigung/Verzögerung mit maximalem Moment zu Beginn und am Ende einer Verstellung keineswegs die kürzest mögliche Verstellzeit ergibt und daß das stoßartig wirkende hohe Moment den Schrittmotor zu Schwingungen anregt, was häufig zu Schrittverlusten führt. Schließlich ergibt sich auch eine ungünstige Dimensionierung des Schrittmotors, da dessen maximales Moment nur kurzzeitig ausgenutzt wird.

Demgegenüber zielt die Erfindung darauf ab, bei günstigerer Bemessung des Schrittmotors die Zeit für einen Verstellvorgang zu verkürzen und die Schwingneigung des Schrittmotors zu reduzieren.

Die Erfindung besteht darin, daß die Schrittwinkel selbst als Winkeltabelle gespeichert werden und ihre Beträge von einer Startposition mit einem Startwert Null über Mikroschritte bis zu einer Endposition mit einem Endwert in der Größe eines Grobschrittes (zB. Viertel- bis Vollschritt) ansteigen. Damit ist eine stetige und ständige Beschleunigung mit einem niedrigen Drehmoment möglich, das sehr viel Sicherheitsabstand von dem Kippmoment hält, so daß die Gefahr von Schrittverlusten praktisch ausgeschlossen ist.

Besonders vorteilhaft ist die Möglichkeit eines automatischen und stetigen Überganges zwischen Mikroschrittbetrieb zwecks Positionierung mit hoher Auflösung und Vollschrittbetrieb zwecks hoher Verstellgeschwindigkeit; dazu ist gemäß Erfindung keine Umschaltung zwischen Grob- und Mikroschrittbetrieb notwendig.

Vorzugsweise erstrecken sich die Schrittwinkel der Winkeltabelle über wenigstens einen Steuerzyklus von 360 Grad des Zeigerwinkels, der durch die Phasenströme bestimmt ist. Bei einem zweiphasigen Schrittmotor mit 50 Polpaaren entspricht dies vier Vollschritten zu je 1,8° Rotorwinkel; einer Umdrehung des elektrischen Zeigerwinkels entspricht somit 7,2° Rotorwinkel. Größere Stellwege werden dabei im Vollschrittbetrieb zurückgelegt, wobei die Zahl der Zeigerumdrehungen in einem Überlaufzähler festgehalten werden.

Besonders günstig ist es jedoch, die Schrittwinkel der Winkeltabelle für einen gegebenen Schrittmotor einschließlich Stelleinrichtung so zu bemessen, daß sich die Beschleuigungs- und die unmittelbar daran anschließende Bremsphase von dem Punkt maximaler Geschwindigkeit bis zu den beiden Grenzen des maximalen Stellbereiches erstrecken: Während der gesamten Verstellung liegt somit stets eine positive oder negative Beschleunigung mit einem vorzugsweise konstanten Drehmoment vor. Damit läßt sich die kürzest mögliche Verstellzeit bei sehr geringer Schwingneigung und günstiger Dimensionierung des Schrittmotors erzielen.

Wenn der Schrittmotor in einer Richtung gegen eine Federvorspannung arbeiten muß, bedeutet dies, daß der Bremsvorgang in dieser Richtung und eine Beschleunigung in der Gegenrichtung durch die Feder unterstützt wird. Eine optimale Auslegung erfordert dafür unterschiedliche Momente beim Beschleunigen und Bremsen gegen die Feder, wobei diese Momente auch noch kleiner sein sollten als die Momente zum Beschleunigen und Bremsen mit der Feder. Auch diesem Sachverhalt kann durch entsprechende Bemessung der Schrittwinkel (asymmetrische Winkeltabellen für die beiden Drehrichtungen) Rechnung getragen werden; die höheren zulässigen Momente beim Bremsen und Beschleunigen mit Federunterstützung können dabei gemäß einer Weiterbildung der Erfindung durch Überspringen von Schrittwinkeln (mehrfach Dekrementieren) erzielt werden.

Bei dem aus oben genanntem US-Patent bekannten Verfahren wird die Dauer der Beschleunigungs- und Bremsphasen sowie einer dazwischenliegenden Phase mit konstanter Geschwindigkeit -nachfolgend Gleichlaufbetrieb genannt - abhängig von einer Zielvorgabe aus einem Speicher ausgelesen. Eine Weiterbildung der Erfindung arbeitet demgegenüber mit einer automatischen Umschaltung von Beschleunigungs- auf Gleichlauf- oder Bremsbetrieb, die nicht von der Zeit sondern von der jeweiligen Zielabweichung abhängig ist.

Hierzu werden je Intervall ein Schrittwinkel und zugeordnete Bereichsparameter ausgelesen und damit mindestens zwei Bereiche, nämlich ein Inkrementierbereich und ein Dekrementierbereich definiert. Je nach Lage der Zielabweichung in dem einen oder anderen Bereich wird dann der nächst höhere (Beschleunigungsbetrieb) oder der nächst kleinere (Bremsbetrieb) Schrittwinkel ausgegeben.

Zweckmäßigerweise liegt zwischen dem Inkrementier- und dem Dekrementierbereich noch ein Korrekturbereich, der je Schrittwinkel durch einen Bereichsparameter Korrekturweite bestimmt ist: Liegt die Zielabweichung innerhalb dieser Korrekturweite, wird derselbe Schrittwinkel erneut ausgegeben, also mit unveränderter Schrittgeschwindigkeit weitergefahren (Gleichlaufbetrieb).

Außer diesem Bereichsparamter muß jedem Schrittwinkel der Schrittwinkeltabelle auch der zugeordnete, vorausberechnete Wert der Schrittgeschwindigkeit am Ende des Intervalls zugeordnet sein. Gemäß einer Weiterbildung der Erfindung kommmt man jedoch ohne diesen zusätzlichen Geschwindigkeitswert aus, wenn man Systemtakt und Invervallänge konstant hält: Dann ist nämlich die Schrittgeschwindigkeit am Ende jedes Intervalles direkt proportional dem Schrittwinkel! In diesem Fall ergeben sich dann besonders einfache Kriterien für den Übergang von Beschleunigen zu Gieichlauf und Bremsen.

Weitere Einzelheiten und Vorteile der Erfindung werden anhand eines derartigen Ausführungsbeispieles näher erläutert; es zeigen:
- Figur 1: das Blockschaltbild einer Anordnung zur Ausführung der Erfindung,
- Figur 2: einen Programmablauf,
- Figur 3: eine Phasenebene (Schrittgeschwindigkeit über Schrittwinkel) zur Erläuterung von Umschaltkriterien,
- Figur 4: eine Phasenebene mit vier Quadranten zur Darstellung von Beschleunigungs- und Bremsbetrieb in zwei unterschiedlichen Richtungen, und
- Figur 5: einen Positionierungsvorgang gemäß Figur 4 im Detail.

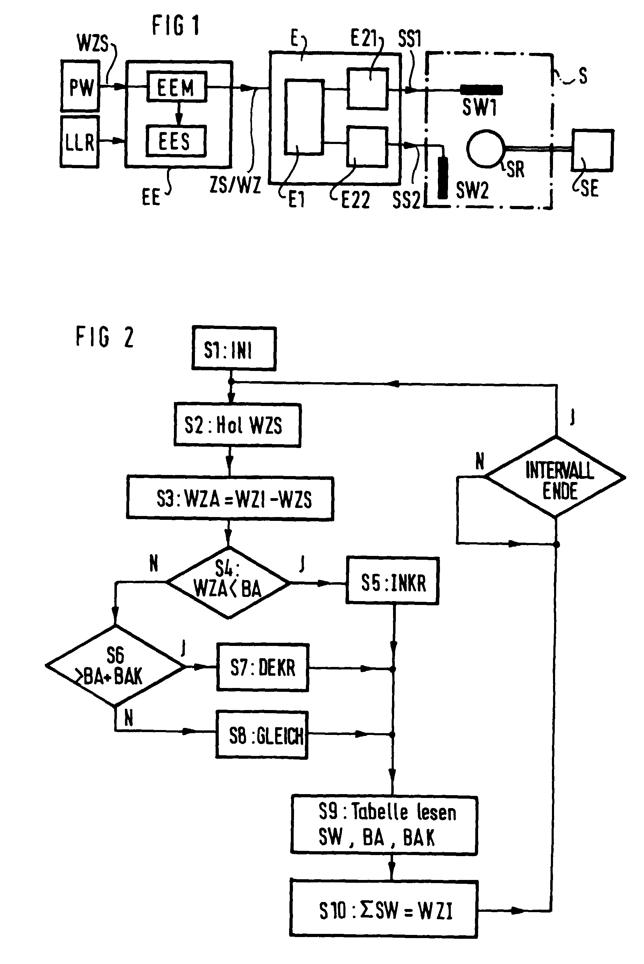

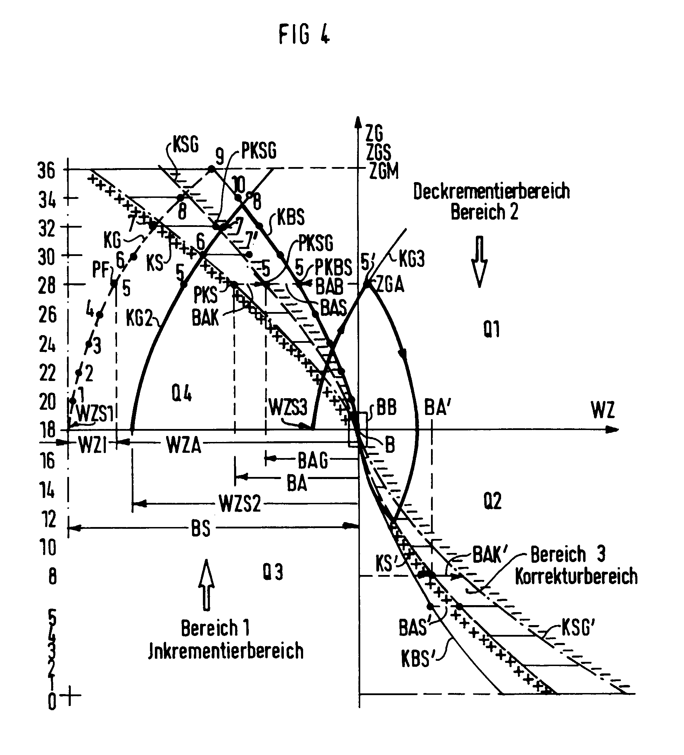

Gemäß Figur 1 ist der Rotor SR eines zweiphasigen, 50-poligen Schrittmotors S mit einer Stelleinrichtung SE gekuppelt; vorzugsweise handelt es sich hierbei um eine Drosselklappe, die direkt auf der verlängerten Welle des Rotors angebracht ist. Die beiden Feldwicklungen SW1,SW2 sind räumlich um 90 Grad gegeneinander versetzt und erzeugen je nach Größe und Richtung der sie durchfließenden Phasenströme SS1, SS2 einen elektrischen Stromzeiger, der durch den Zeigerwinkel WZ eines Sollzeigers ZS bestimmt sein soll. Der Sollzeiger ZS wird hierzu einer Schalteinrichtung E zugeführt, die im wesentlichen aus einem Sollwertgeber E1 und zwei von diesem gesteuerten Endstufen E21 E22 besteht, die die Phasenströme SS1, SS2 auf den jeweiligen Sollwert einstellt. Der Sollwertgeber E1 -im wesentlichen ein Analogdigitalwandler mit 8 Biterzeugt hierzu zwei Sollwerte, die dem Sinus bzw. Cosinus des Zeigerwinkels WZ des Sollzeigers ZS proportional sind.

Der Sollzeiger ZS wird von einer Steuereinheit EE mit einem Mikrocontroller EEM und einem Speicher EES geliefert, und zwar mit einer Auflösung von 360/512 = 0,703° elektrisch oder 7,2/512 = 0,01406° mechanisch (= ein Mikroschritt).

Der Sollwert WZS des Zeigerwinkels WZ des Sollzeigers ZS wird von einem Pedalwertgeber PW oder von einem Leerlaufregler LLR geliefert.

Die Winkeltabelle ist in einem vom Mikroprozessor EEM adressierbaren und auslesbaren Speicher EES abgelegt und zwar so, daß die Schrittwinkel aufeinanderfolgenden, durch Adreßzeiger bestimmten Adressen so zugeordnet sind, daß ihre Beträge beginnend mit dem Startwert unter einer Startadresse bis zu dem Endwert unter einer Endadresse ansteigen, wie dies beispielhaft für einige ausgewählte Adressen TA in der folgenden Tabelle dargestellt ist.

| **TA** | **Zeit** | **WS** | **ZG** | **WZ** | **WR** | **BA** | **BAK** |
|---|---|---|---|---|---|---|---|
| Nr | ms | MS | MS/ms | MS | Grad | MS | MS |
| 60 | 29 | 127 | 127 | 2062 | 28,99 | -1065 | 127 |
| | | | | | | | |
| | | | | | | | |
| 47 | 16 | 76 | 76 | 711 | 9,99 | -373 | 80 |
| 46 | 15 | 72 | 72 | 635 | 8,93 | -338 | 76 |
| | | | | | | | |
| | | | | | | | |
| 33 | 2 | 14 | 14 | 24 | 0,34 | -14 | 18 |
| 32 | 1 | 10 | 10 | 10 | 0,14 | -10 | 14 |
| 31 | 0 | 0 | 0 | 0 | 0 | 0 | 10 |
| 30 | 1 | -12 | 12 | -12 | -0,17 | 60 | 48 |
| 29 | 2 | -20 | 20 | -32 | -0,45 | 96 | 64 |
| 28 | 3 | -28 | 28 | -60 | -0,84 | 139 | 79 |
| | | | | | | | |
| | | | | | | | |
| 19 | 12 | -72 | 72 | -559 | -7,86 | 715 | 156 |
| 18 | 13 | -76 | 76 | -635 | -8,9 | 799 | 164 |
| | | | | | | | |
| | | | | | | | |
| 6 | 28 | -124 | 124 | -1859 | -26,14 | 2114 | 255 |
| 5 | 29 | -128 | 128 | -1987 | -27,93 | 2242 | 255 |

Außer den abgespeicherten Spalten (Adresse TA, Schrittwinkel WS, Bereichsparamtern Schaltabstand BA und Korrekturweite BAK) enthält diese Tabelle zum besseren Verständnis zusätzlich die Zeit, die Schrittgeschwindigkeit ZG, den Zeigerwinkel WZ als Summe der Schrittwinkel WS ab Startposition 31, sowie den zugehörigen Rotorwinkel WR. Da hierbei eine Intervalldauer von 1 ms zugrunde gelegt ist, ist der Zahlenwert von Schrittwinkel WS und Schrittgeschwindigkeit ZG identisch. Die Größen WS, ZG, BA, und BAK sind in Vielfachen eines Mikroschrittes MS angegeben.

Bei diesem Ausführungsbeispiel bilden zwei, jeweils für eine Drehrichtung geltende Winkeltabellen eine einzige Gesamttabelle mit durchlaufenden Adressen TA. Hierbei werden dieselben Schrittwinkel zum Beschleunigen und Bremsen verwendet und lediglich in unterschiedlicher Richtung nacheinander ausgelesen.

Es liegt jedoch im Rahmen der Erfindung, je Drehrichtung mehrere Tabellen mit unterschiedlichen Schrittweiten für den Brems- und/oder Beschleunigungsbetrieb abzulegen und von einer auf die andere Tabelle abhängig von zusätzlichen Parametern überzugehen.

Unter Benutzung der genannten abgespeicherten Werte läuft im Mikrocontroller EEM im wesentlichen das in Figur 2 dargestellte Programm ab:

Bei Inbetriebnahme wird im Schritt S1 eine Initialisierung durchgeführt, bei der der Schrittmotor in eine Endposition (geschlossene Drosselklappe) gefahren, der Adreßzeiger der Winkeltabelle in dem Speicher EES in die Startposition (Startadresse 31) und ein Positionsspeicher für den Istwert WZI auf Null gesetzt wird. Die folgenden Programmschritte wiederholen sich dann in jedem Intervall eines Systemtaktes, beispielsweise nach jeder Millisekunde.

In Schritt S2 wird der Sollwert WZS vom Pedalwertgeber PW oder von dem Leerlaufregler LLR geholt und zwischengespeichert. In S3 wird dann die Zielabweichung WZA als Differenz zwischen dem im vorhergehenden Intervall gebildeten und im Positionsspeicher abgelegten Istwert WZI und dem Sollwert WZS berechnet. In S4 wird dann geprüft, ob sich die Zielabweichung WZA in dem Inkrementierbereich befindet, was dann der Fall ist, wenn die Zielabweichung kleiner als der Schaltabstand BA einer Schaltkurve KS ist. Ist dies der Fall, wird die Adresse der Winkeltabelle inkrementiert, ist es nicht der Fall, wird in S6 geprüft, ob die Zielabweichung im Dekrementierbereich liegt, ob sie also größer als die Summe von Schaltabstand BA und Korrekturweite BAK des Korrekturbereiches ist. Ist das der Fall, wird in Schritt S7 die Adresse der Winkeltabelle dekrementiert, andernfalls bleibt sie gleich, sodaß im nächsten Intervall derselbe Schrittwinkel erneut ausgegeben wird.

In Schritt S9 werden die durch den Adreßzeiger bestimmten Werte des Schrittwinkels WS, des Schaltabstandes BA und der Korrekturweite BAK gelesen. In Schritt S10 wird der Istwert WZI gebildet indem der ausgelesene Schrittwinkel vorzeichenrichtig zu dem Inhalt des Positionsspeichers addiert wird, sodaß er die Summe aller Schrittwinkel WS ab Initialisierung und damit den aktuellen Zeigerwinkel, der ein Maß für die Position des Rotors ist, enthält. Wenn sich der Adreßzeiger in einer Endposition oder in einer durch Begrenzung gegebenen Grenzposition befindet, wird der zugehörige Schrittwinkel in aufeinanderfolgenden Intervallen solange ausgegeben, bis die Zielabweichung das Kriterium zum Übergang in den Bremsbetrieb erfüllt. Dementsprechend oft wird dieser Schrittwinkel in den Positionsspeicher addiert.

Diese Schritte werden nach dem Ende eines jeden Intervalles wiederholt, solange die Zielabweichung ungleich Null ist.

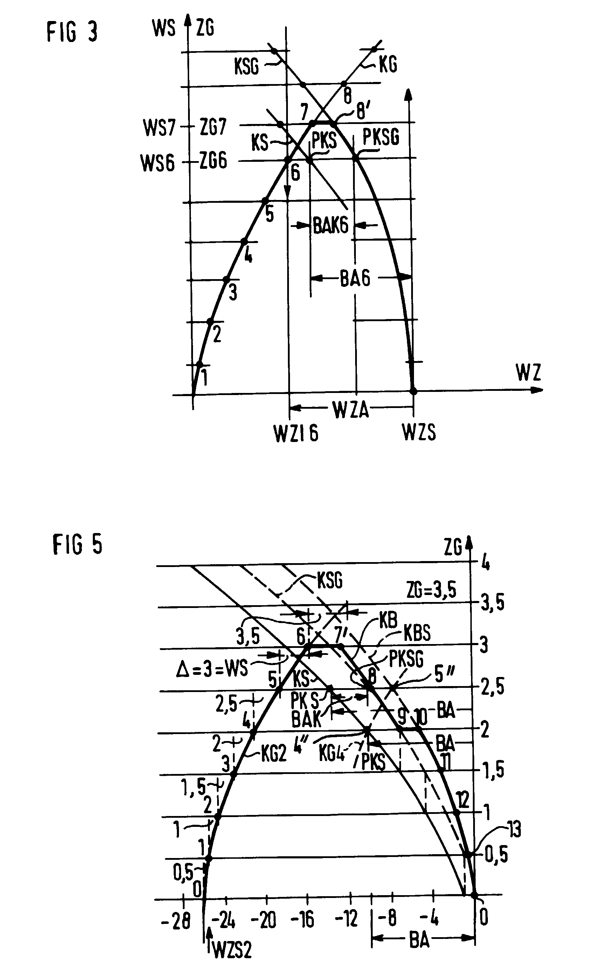

Die Phasenebene nach Figur 3 gibt den Verlauf der Winkelgeschwindigkeit ZG (gleichbedeutend mit dem Schrittwinkel WS) abhängig vom Zeigerwinkel WZ wieder. Die Punkte einer Grundkurve KG sind durch die einzelnen Zeilen der Winkeltabelle gegeben und veranschaulichen einen Beschleunigungsverlauf. Das Ende eines jeden Intervalles (Schrittes) ist durch fortlaufende Nummern 1 bis 8 markiert. Am Ende des 6. Schrittes mit Sichrittwinkel WS6 ergibt sich die dazu proportionale Schrittgeschwindigkeit ZG6 sowie der Zeigerwinkel WZI6, der als Summe aller Schrittwinkel WS (WS1 bis WS6) ab Startposition in dem Positionsspeicher abgelegt ist. Zusammen mit dem Positionssollwert WZS ergibt sich eine -definitionsgemäß- negative Zielabweichung WZA.

Da diese kleiner (negativer) ist als der zugehörige Schaltabstand BA6, wird die Adresse inkrementiert und der Schrittwinkel WS7 ausgegeben. Die zugehörige Zielabweichung, die im nächsten (7.) Intervall ermittelt wird, liegt jetzt innerhalb der Korrekturweite BAK, sodaß der Schrittwinkel für das folgende (8.) Intervall unverändert bleibt.

Anstelle des geschilderten Kriteriums könnte in jedem Punkt auch der aktuelle Schrittwinkel WS auf der Ordinate der Phasenebene mit dem Winkel verglichen werden, der durch die Ordinaten der Kurven KS und KSG gegeben ist. Diese Winkel müssen aber erst durch Interpolation errechnet werden, wenn die Kurven KS und KSG - wie üblich - nur punktuell abgespeichert sind. Grundsätzlich kommt man jedoch zu demselben Ergebnis: In Punkt 6 ist nämlich der durch KS gegebene Winkel größer als WS6 und es ist dementsprechend zu beschleunigen. Der zu Punkt 7 gehörige Schrittwinkel WS7 liegt dagegen zwischen den durch die Kurven KS und KSG gegebenen Schrittwinkeln und es ist demzufolge keine Veränderung des Schrittwinkels vorzunehmen.

Anhand der Figur 4 werden die genannten Größen und ihre Beziehungen zueinander detailiert besprochen: Die Figur zeigt ein Koordinatensystem mit vier Quadranten Q1 bis Q4 (entsprechend der Winkeltabelle auf Seite 6), in dem auf der Abszisse der Zeigerwinkel WZ und damit zusammenhängende Winkelgrößen, insb. die Zielabweichung WZA, und auf der Ordinate die Winkelgeschwindigkeit ZG (= Schrittgeschwindigkeit ZGS) aufgetragen sind. Der maximale Stellbereich BS von beispielsweise 90° einer Drosselklappe erstreckt sich von der Zielposition B im Nullpunkt des Koordinatensystems gegen negative Werte: Gemäß der Definition der Zielabweichung WZA als Differenz zwischen dem Istwert WZI und dem Sollwert WZS entspricht dem vollständigen Öffnen der Drosselklappe aus der Schließstellung heraus ein negativer Sollwert WZS1 von 90°. Von diesem Punkt aus erstreckt sich eine Grundkurve KG, die durch Fixpunkte PF bestimmt ist, die jeweils durch eine Position der Winkeltabelle gegeben sind. Auf der Abszisse ist jeweils als Istwert WZI die Summe aller ab Initialisierung ausgelesenen Schrittwinkel angegeben.

Die Grundkurve erreicht etwa in der Mitte des Stellbereiches BS die Maximalgeschwindigkeit ZGM, von wo sich eine Sollbremskurve KBS zur Zielposition B erstreckt, in die diese Kurve mit der Winkelgeschwindigkeit Null eintritt; sie ist durch Bremspunkte PKBS bestimmt, die jeweils von der Zielposition B einen Bremsabstand BAB haben, der gleich dem der Fixpunkte PF von dem Sollwert WZS ist: Es handelt sich somit um ein Spiegelbild der Grundkurve.

In dem Beispiel haben Sollbremskurve KBS und Grundkurve KG am Ende des neunten Intervalles (Punkt 9) dieselbe Geschwindigkeit ZGM bei derselben Zielabweichung. Daher ist in diesem Fall ein bruchloser Übergang in die ideale Sollbremskurve KBS möglich. Dies ist jedoch gewöhnlich nicht der Fall, wie die einem zweiten Sollwert WZS2 zugeordnete zweite Grundkurve KG2 zeigt: Hier liegt die Winkelgeschwindigkeit am Ende des siebten Invervalles noch unterhalb der Sollbremskurve KBS, am Ende des nächsten Intervalles -Punkt 8- aber bereits darüber: Eine Bremkurve, die sich erst an das Ende des achten Intervalles anschließt, würde daher den Zielpunkt nicht direkt, sondern erst nach einem weiteren Beschleunigen und Bremsen in Gegenrichtung erreichen.

Um dieses verzögernde "Umschwingen" des Zielpunktes zu vermeiden, orientiert sich der Übergang von Beschleunigen in Bremsbetrieb an zwei weiteren Kurven, nämlich einer Schaltkurve KS und einer Grenzkurve KSG, die beide von der Sollbremskurve KBS bzw. deren Bremspunkten PKBS abgeleitet sind. Die Schaltkurve KS ist durch Schaltpunkte PKS und die Grenzkurve KSG durch Grenzpunkte PKSG bestimmt, wobei diese einander und dem Fixpunkt PF der Grundkurve KG zugeordneten Punkte in demselben Intervall dieselbe Geschwindigkeit aufweisen (demselben Schrittwinkel zugeordnet sind). Jeder Schaltpunkt PKS hat von der Zielposition B einen Schaltabstand BA und jeder Grenzpunkt PKSG einen Zielabstand BAG von der Zielposition B.

Zwischen jedem Bremspunkt PKBS der Sollbremskurve KBS und der ihr zugewandten Grenze eines Korrekturbereiches 3 liegt ein Abfangabstand BAS, der mindestens gleich ist dem Schrittwinkel bei der jeweiligen Schrittgeschwindigkeit ZGS. Im Falle des Quadranten Q4 wird diese Grenze durch die Grenzkurve KSG, im Falle des Quadranten Q2 durch die Schaltkurve KS' gebildet. Diese Unterscheidung hat keine physikalische Bedeutung sondern ermöglicht lediglich eine einfachere Berechnung unter Berücksichtigung der unterschiedlichen Vorzeichen je Bewegungsrichtung und Quadrant. Durch die angegebene Bemessung des Abfangabstandes BAS ist gewährleistet, daß ein auf der Grenzkurve KSG im Quadrant Q4 bzw. auf der Schaltkurve KS' im Quadrant Q2 beginnendes Intervall - Punkt 9 in Figur 5 - nicht jenseits der Sollbremskurve sondern genau auf dieser endet - Punkt 10 in Figur 5 .

Die Korrekturweite BAK des Korrekturbereiches 3 bei jeder Schrittgeschwindigkeit ist mindestens gleich der Differenz der Summen von Abfangabstand BAS und Bremsabstand BAB bei der nächsthöheren und bei der aktuellen Schrittgeschwindigkeit (BAB + BAS)ₙ₊₁ - (BAB + BAS)ₙ. Durch diese Bemessung ist sichergestellt, daß ein auf der Schaltkurve KS bzw. der Grenzkurve KSG' beginnendes Intervall - Punkt 4" in Figur 5 - genau auf der Sollbremskurve KBS endet (Punkt 5").

Der den einzelnen Schrittwinkeln zugeordnete und abgespeicherte Schaltabstand BA ergibt sich aus diesen Größen als Summe von Bremsabstand BAB, Abfangabstand BAS und Korrekturweite BAK.

Am Ende des fünften Intervalles in Fig 4 ist die Zielababweichung der Grundkurve KG2 -unter Berücksichtigung des Vorzeichens- deutlich kleiner als der Schaltbstand BA bei der Ab-schaltgeschwindigkeit ZGA: Daher wird der Adreßzeiger inkrementiert und der nächsthöhere Schrittwinkel ausgegeben. Die Zielabweichung am Ende dieses 6. Intervalles liegt dann aber bereits oberhalb der Schaltkurve KS, also innerhalb der Korrekturweite BAK mit dem Ergebnis, daß der Adreßzeiger für das folgende 7. Intervall unverändert bleibt, sodaß die Zielabweichung am Ende des siebten Intervalles (im Punkt 7') bereits in dem durch die Grenzkurve KSG begrenzten Dekrementierbereich 2 liegt. Dementsprechend wird in Bremsbetrieb umgeschaltet, wobei sich ein Verlauf ergibt, der deutlicher aus Figur 5 ersichtllich ist. Daraus ist zu ersehen, daß die aktuelle Bremskurve KB zunächst zwischen der Grenzkurve KSG und der Sollbremskurve KBS verläuft um dann -Punkt 9- wieder etwas in den Korrekturbereich einzutreten: Deshalb bleibt während des 10. Intervalles die Geschwindigkeit unverändert und die aktuelle Bremskurve KB trifft in Punkt 10 die Sollbremskurve und verläuft dann mit dieser in idealer Weise in die Zielposition.

In Figur 4 ist noch der Fall veranschaulicht, daß innerhalb der Dauer des 5. Intervalles eine neue Sollposition WZS3 vorgegeben wird, die zu einer positiven Zielabweichung führt und eine Richtungsumkehr erforderlich macht. Diese Situation läßt sich veranschaulichen durch eine Verschiebung von KG2 in die Position von KG3. Der Punkt 5' auf KG3 liegt nun weit oberhalb der Sollbremskurve im Dekrementierbereich 2, weshalb sofort in den Bremsbetrieb übergegangen wird, was zunächst zu einer weiteren Zunahme der Zielabweichung führt. Nach Erreichen der Stillstandsposition wird daher weiter dekrementiert, also in Gegenrichtung beschleunigt, und anschließend inkrementiert (gebremst), sobald die Zielabweichung kleiner als der durch KS' gegebene Schaltabstand BA geworden ist.

Diese Vorgänge laufen bei der Erfindung automatisch ab und ergeben sich durch einfaches Dekrementieren der Adressen der Winkeltabelle. In Fig 4 ist deshalb die Zuordnung der Adres-sen zu den Schrittwinkeln am linken Rand mit den Ziffern 0 bis 36 angedeutet, wobei 18 die Adresse für den Startwert 0 (Ruheposition) ist. In diesem Fall bilden die in den Quadranten Q2 und Q4 dargestellten Kurven zwei für unterschiedliche Drehrichtungen geltende Winkeltabellen, die zu einer Gesamttabelle mit durchlaufenden Adressen zusammengefaßt sind. Hierbei wird der Adreßzeiger so lange inkrementiert, wie die Zielabweichung kleiner ist als der Wert, der bei der einen Drehrichtung (Öffnen der Drosselklappe) durch die Schaltkurve KS und bei der entgegengesetzten Drehrichtung durch die Grenzkurve KSG' gegeben ist (Inkrementierbereich1).

Umgekehrt wird der Adreßzeiger solange dekrementiert, wie die Zielabweichung größer ist als der Wert, der bei der einen Drehrichtung - Öffnen der Drosselklappe - durch die Grenzkurve KSG und bei der anderen Drehrichtung durch die Schaltkurve KS' gegeben ist (Dekrementierbereich 2). Zwischen den beiden Bereichen, deren Grenzen mit Plus- bzw. Minuszeichen markiert sind, liegt der Korrekturbereich 3: Liegt die Zielabweichung in diesem Bereich, bleibt der Adreßzeiger in seiner Position unverändert.

Abweichend von der Darstellung in Figur 4 können die Kurven asymmetrisch gewählt werden, insbesondere dann, wenn der Schrittmotor beim Öffnen gegen eine Feder arbeiten muß, wozu flacher verlaufende Kurven (Grundkurve in Quadrant Q4 und Bremskurven im Quadrant Q2) zweckmäßig sind. Die damit verbundene Reduzierung der Verstellgeschwindigkeit kann dadurch kompensiert werden, daß man beim Bremsen und Beschleunigen mit Federunterstützung - also im Dekrementierbereich 2 der Figur 4- dopppelt oder gar dreifach dekrementiert: Dadurch wird innerhalb eines einzigen Intervalles als Schrittwinkel die Summe von zwei oder gar drei aufeinanderfolgenden Schrittwinkeln wirksam.

Wenn die Zielabweichung und die zugehörige Winkelgeschwindigkeit innerhalb eines engen Zielbereiches BB um die Zielposition B herum zu liegen kommt, wird die Steuerung über die Winkeltabelle unterbrochen und der Zeigerwinkel WZ des Sollzeigers direkt auf den Sollwert WZS gesetzt.
Im Rahmen der Erfindung ist es in einfacher Weise möglich, die maximale Winkelgeschwindigkeit einstellbar, insbesondere von Parametern einer Brennkraftmaschine abhängig zu machen. Hierzu braucht lediglich der Bereich innerhalb dessen sich der Adreßzeiger bewegen kann, entsprechend begrenzt zu werden. Auch ist es möglich, je Drehrichtung mehrere Schrittwinkeltabellen mit unterschiedlich steilen Beschleunigungs- und Bremskurven vorzusehen, die jeweils abhängig von Betriebsparametern eines Verbrennungsmotors aktiviert werden können.

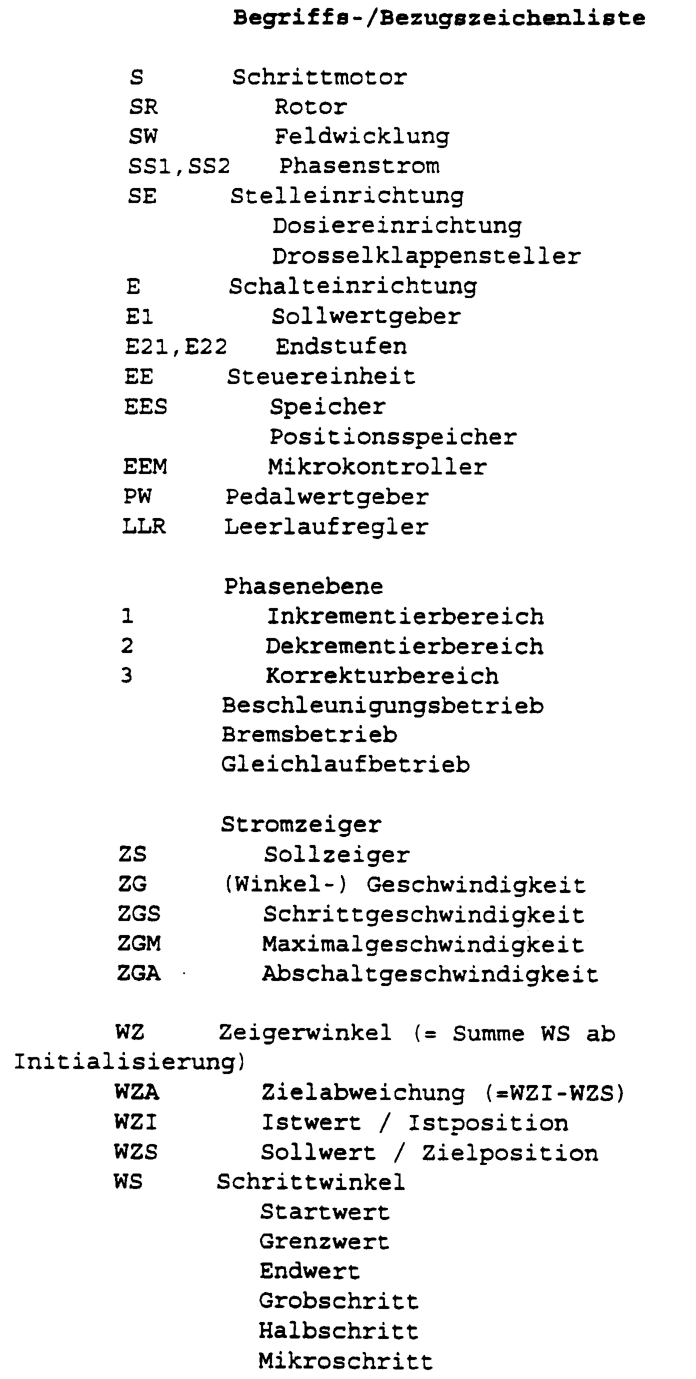

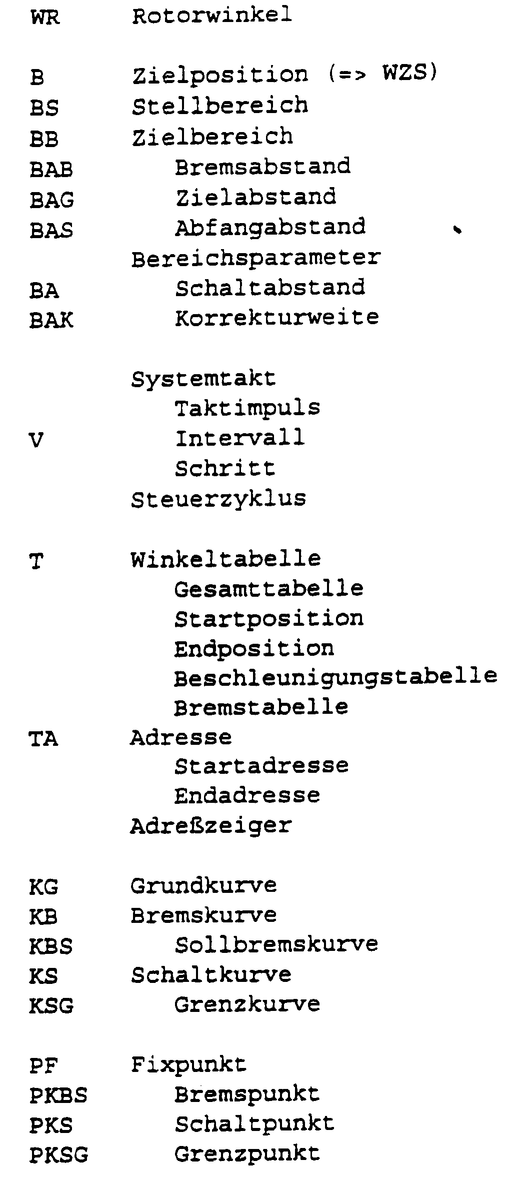

## Patentansprüche

1. Verfahren zum Steuern eines Schrittmotors (S),dessen Feldwicklungen (SW1,SW2) an eine Schalteinrichtung (E) angeschlossen sind, die Betrag und Richtung der Phasenströme (SS1,SS2) in den Feldwicklungen abhängig von dem Zeigerwinkel (WZ) eines Sollzeigers (ZS) einstellt, der je Intervall eines Systemtaktes um einen Schrittwinkel (WS) weitergeschaltet wird, der abhängig ist von gespeicherten Werten, die zum Beschleunigen in Richtung zunehmender Werte und zum Bremsen in umgekehrter Richtung ausgelesen werden,
**dadurch gekennzeichnet,**
daß die Schrittwinkel (WS) selbst als Winkel tabelle (T) gespeichert sind und ihre Beträge als Mikroschritte von einer Startposition mit einem Startwert Null bis zu einer Endposition mit einem Endwert in der Größe eines Grobschrittes ansteigen.

2. Verfahren nach Anspruch 1,
**dadurch gekennzeichnet,** daß jeder Schrittwinkel ein ganzzahliges Vielfaches eines Mikroschrittes ist.

3. Verfahren nach Anspruch 1,
**dadurch gekennzeichnet**, daß die Summe der Beträge aller Schrittwinkel (WS) mit gleichem Vorzeichen in der Schrittwinkeltabelle mindestens gleich einem ganzen Steuerzyklus von 360 Grad Zeigerwinkel (WZ) ist.

4. Verfahren nach Anspruch 1,
**dadurch gekennzeichnet,** daß je Intervall
- ein Schrittwinkel und zugeordnete Bereichaparameter (BA, BAK) ausgelesen Werden,
- ein Istwert (WZI) als Summe aller ab Start des Verfahrens ausgelesenen Schrittwinkel (WS) und eine Zielabweichung (WZA) als Differenz zwischen diesem Istwert (WZI) und einem Sollwert (WZS) gebildet werden,
- daß durch die Bereichsparameter mindestens zwei Bereiche, nämlich ein Inkrementierbereich (1) und ein Dekrementierbereich (2) definiert werden, und
- daß geprüft wird, in welchem dieser Bereiche die Zielabweichung (WZA) liegt, und daß entsprechend dem Ergebnis ein größerer oder kleinerer Schrittwinke -im Vergleich zu dem aktuellen Schrittwinkel aus der schrittwinkeltabelle ausgelesen wird.

5. Verfahren nach Anspruch 4,
**dadurch gekennzeichnet,** daß der Zeigerwinkel (WZ) des Sollzeigers (ZS) direkt - ohne Steuerung über die Winkeltabelle- auf den Sollwert (WZS) gesetzt wird, sobald in einem Intervall die Zielabweichung (WZA) und der Schrittwinkel (WS) kleiner als zugeordnete Grenzwerte sind.

6. Verfahren nach Anspruch 4
**dadurch gekennzeichnet**, daß zwischen Inkrementierbereich (1) und Dekrementierbereich (2) ein Korrekturbereich (3) liegt, und daß derselbe Schrittwinkel erneut ausgelesen wird, wenn sich die Zielabweichung (WZA) in dem Korrekturbereich (3) befindet.

7. Verfahren nach Anspruch 6,
**dadurch gekennzeichnet,** daß Systemtakt und Intervall konstant sind.

8. Verfahren nach Anspruch 7
**dadurch gekennzeichnet,** daß die Schrittwinkel (WS) aufeinanderfolgenden, durch Adreßzeiger (TZ) bestimmten Adressen (TA) so zugeordnet sind, daß ihre Beträge beginnend mit dem Startwert unter einer Startadresse (TAS) bis zu dem Endwert unter einer Endadresse (TAE) ansteigen, daß jedem Adreßzeiger (TZ) als Bereichsparameter ein Schaltabstand (BA) und eine Korrekturweite (BAK) zugeordnet sind, daß je Intervall die durch den Adreßzeiger bestimmten Werte ausgelesen werden, daß ermittelt wird, ob die Zielabweichung (WZA) kleiner als der Schaltabstand (BA) oder größer als die Summe aus Schaltabstand(BA) und Korrekturbereich (BAK) ist oder zwischen diesen Werten liegt, und daß der Adreßzeiger abhängig vom Ergebnis inkrementiert, dekrementiert bzw. unverändert gelassen wird.

9. Verfahren nach Anspruch 8,
**dadurch gekennzeichnet**, daß je Drehrichtung mindestens eine Winkeltabelle vorgesehen ist, und daß sich die Schrittwinkel (WS) für unterschiedliche Drehrichtungen durch ihr Vorzeichen unterscheiden.

10. Verfahren nach Anspruch 9,
**dadurch gekennzeichnet,** daß zum Beschleunigen und Bremsen dieselbe Winkeltabelle (T) schrittweise in beiden Richtungen ausgelesen wird.

11. Verfahren nach Anspruch 10,
**dadurch gekennzeichnet**, daß zwei für unterschiedliche Drehrichtungen geltende Winkeltabellen eine Gesamttabelle bilden, in der die Adressen von der Startadresse an zu dem Endwert für die eine Richtung ansteigen und in Richtung des Endwertes für die andere Richtung abnehmen.

12. Verfahren nach Anspruch 11,
wobei eine Feder den Schrittmotor in einer Drehrichtung unterstützt, **dadurch gekennzeichnet,** daß der Adreßzeiger mindestens eine Adresse überspringt, wenn die Zielabweichung in einem Bereich (2) liegt, in dem durch die Feder unterstützter Brems- oder Beschleunigungsbetrieb vorliegt.

13. Verfahren nach Anspruch 8,
**dadurch gekennzeichnet,** daß eine Sollbremskurve (KBS) berechnet wird, die mit der Geschwindigkeit Null in die Zielposition (B) mündet und durch Bremspunkte (PKBS) mit einem Bremsabstand (BAB) zur Zielposition (B) bestimmt ist, und daß von der Sollbremskurve (KBS) eine Schaltkurve (KS) abgeleitet wird, die durch Schaltpunkte (PKS) bestimmt ist, von denen jeder bei einer Schaltgeschwindigkeit (ZGA) einen Schaltabstand (BA) von der Zielposition (B) hat.

14. Verfahren nach Anspruch 13,
**dadurch gekennzeichnet,** daß zwischen jedem Bremspunkt (PKBS) der Sollbremskurve (KBS) und der ihr zugewandten Grenze (KSG;KS') des Korrekturbereiches (3) ein Abfangabstand (BAS) liegt, der mindestens gleich ist dem Schrittwinkel bei der jeweiligen Schrittgeschwindigkeit (ZGS).

15. Verfahren nach Anspruch 14,
**dadurch gekennzeichnet,** daß die Korrekturweite (BAK) des Korrekturbereiches (3) bei jeder Schrittgeschwindigkeit gleich ist der Differenz der Summen von Abfangabstand (BAS) und Bremsabstand (BAB) bei der nächsthöheren und bei der aktuellen Schrittgeschwindigkeit.

16. Verfahren nach Anspruch 15,
**dadurch gekennzeichnet,**
daß der Schaltabstand (BA) bei jeder Schrittgeschwindigkeit gleich ist der Summe von Bremsabstand (BAB), Abfangabstand (BAS) und Korrekturweite (BAK).

17. Verfahren nach Anspruch 1,
**dadurch gekennzeichnet,** daß mit dem Schrittmotor (S) eine Dosiereinrichtung eines Verbrennungsmotors gekoppelt ist und die Zielposition (B) durch einen Pedalwertgeber (PW) bestimmt ist.

18. Verfahren nach Anspruch 17,
**dadurch gekennzeichnet**, daß mehrere Beschleunigungstabellen (TS) und Bremstabellen (TB) für unterschiedlich steile Beschleunigungs- und Bremskurven gespeichert sind und jeweis eine davon abhängig von Betriebsparametern des Verbrennungsmotors aktiviert wird.

19. Verfahren nach Anspruch 17,
**dadurch gekennzeichnet**, daß der maximale Schrittwinkel (WS) von Parametern des Verbrennungsmotors abhängig ist.

20. Verfahren nach Anspruch 17,
**dadurch gekennzeichnet,** daß die Dosiereinrichtung ein Drosselklappensteller ist und die Drosselklappe direkt auf der verlängerten Welle des Rotors (SR) sitzt.

## Claims

1. Method for controlling a stepping motor (S), whose field windings (SW1, SW2) are connected to a switching device (E) which sets the magnitude and direction of the phase currents (SS1, SS2) in the field windings as a function of the vector angle (WZ) of a required vector (ZS) which is switched onwards by one step angle (WS) per interval of a system clock, which step angle (WS) is dependent on stored values which are read out in the direction of increasing values for acceleration and in the reverse direction for braking, characterized in that the step angles (WS) themselves are stored as an angle table (T) and their magnitudes rise as microsteps from an initial position having an initial value of zero to a final position having a final value in the order of magnitude of a coarse step.

2. Method according to Claim 1, characterized in that each step angle is an integer multiple of a micro-step.

3. Method according to Claim 1, characterized in that the sum of the magnitudes of all the step angles (WS) having the same mathematical sign in the step angle table is at least equal to an entire control cycle of 360° of the vector angle (WZ).

4. Method according to Claim 1, characterized in that, per interval,
- one step angle and associated region parameters (BA, BAK) are read out,
- an actual value (WZI) is formed as the sum of all the step angles (WS) read out from the start of the method, and a destination error (WZA) is formed as the difference between this actual value (WZI) and a required value (WZS),
- in that at least two regions, namely an incrementation region (1) and a decrementation region (2) are defined by the region parameters, and
- in that a check is carried out to determine in which of these regions the destination error (WZA) is located, and in that a larger or smaller step angle than the current step angle is read out of the step angle table, corresponding to the result.

5. Method according to Claim 4, characterized in that the vector angle (WZ) of the required vector (ZS) is set directly to the required value (WZS) - without being controlled via the angle table - as soon as the destination error (WZA) and the step angle (WS) in an interval are less than associated limit values.

6. Method according to Claim 4, characterized in that there is a correction region (3) between the incrementation region (1) and the decrementation region (2), and in that the same step angle is read out once again if the destination error (WZA) is in the correction region (3).

7. Method according to Claim 6, characterized in that the system clock and interval are constant.

8. Method according to Claim 7, characterized in that the step angles (WS) are assigned to successive addresses (TA) which are governed by an address pointer (TZ), such that their magnitudes rise, starting with the initial value at an initial address (TAS), to the final value at a final address (TAE), in that a switching separation (BA) and a correction width (BAK) are assigned to each address pointer (TZ) as region parameters, in that the values governed by the address pointer are read out per interval, in that it is determined whether the destination error (WZA) is less than the switching separation (BA) or greater than the sum of the switching separation (BA) and the correction region (BAK) or is between these values, and in that the address pointer is incremented, decremented or left unchanged as a function of the result.

9. Method according to Claim 8, characterized in that at least one angle table is provided for each rotation direction, and in that the mathematical signs of the step angles (WS) differ for different rotation directions.

10. Method according to Claim 9, characterized in that the same angle table (T) is read from in a step by step manner in both directions for acceleration and braking.

11. Method according to Claim 10, characterized in that two angle tables which apply to different rotation directions form an overall table in which the addresses rise from the initial address to the final value for one direction and reduce in the direction of the final value for the other direction.

12. Method according to Claim 11, a spring assisting the stepping motor in one rotation direction, characterized in that the address pointer jumps over at least one address when the destination error is in a region (2) in which the braking or acceleration operation is assisted by the spring.

13. Method according to Claim 8, characterized in that a required braking curve (KBS) is calculated which starts with the speed zero at the destination position (B) and is determined by braking points (PKBS) with a braking separation (BAB) from the destination position (B), and in that a switching curve (KS) is derived from the required braking curve (KBS) and is determined by switching points (PKS), each of which is at a switching separation (BA) from the destination position (B) at a switching speed (ZGA).

14. Method according to Claim 13, characterized in that there is a catchment separation (BAS) between each braking point (PKBS) on the required braking curve (KBS) and that limit (KSG; KS') of the correction region (3) which faces it, which catchment separation (BAS) is at least equal to the step angle at the respective stepping speed (ZGS).

15. Method according to Claim 14, characterized in that the correction width (BAK) of the correction region (3) at each stepping speed is equal to the difference between the sums of the catchment separation (BAS) and the braking separation (BAB) at the next higher stepping speed and at the current stepping speed.

16. Method according to Claim 15, characterized in that the switching separation (BA) at each stepping speed is equal to the sum of the braking separation (BAB), the catchment separation (BAS) and the correction widths (BAK).

17. Method according to Claim 1, characterized in that a metering device of an internal combustion engine is coupled to the stepping motor (S), and the destination position (B) is governed by a pedal value transmitter (PW).

18. Method according to Claim 17, characterized in that a plurality of acceleration tables (TS) and braking tables (TB) are stored for acceleration curves and braking curves of different gradient, and one of them is in each case activated as a function of operating parameters of the internal combustion engine.

19. Method according to Claim 17, characterized in that the maximum step angle (WS) is a function of parameters of the internal combustion engine.

20. Method according to Claim 17, characterized in that the metering device is a throttle valve actuating device, and the throttle valve is seated directly on the extended shaft of the rotor (SR).

## Revendications

1. Procédé pour la commande d'un moteur pas à pas (S) dont les enroulements de champs (SW1, SW2) sont reliés à un circuit (E), qui ajuste l'intensité et le sens des courants de phase (SS1, SS2) circulant dans les enroulements de champs, en fonction de l'angle vectoriel (WZ) d'un vecteur de consigne (ZS), qui, à chaque intervalle d'une horloge de système, est déplacé d'un pas angulaire (WS) supplémentaire qui est fonction de valeurs mémorisées lues en régime d'accélération dans le sens de valeurs croissantes et en régime de freinage dans le sens inverse,
Caractérisé en ce que les pas angulaires (WS) sont mémorisés eux-mêmes sous forme de tables d'angles (T) et en ce que leurs valeurs exprimant des micropas, augmentent depuis une position de début associée à une valeur de début nulle jusqu'à une position de fin associée à une valeur de fin qui a la valeur d'un pas grossier.

2. Procédé selon la revendication 1, caractérisé par le fait que chaque pas angulaire est un multiple entier d'un micropas.

3. Procédé selon la revendication 1, caractérisé par le fait que la somme des valeurs de tous les pas angulaires (WS) ayant même signe dans la table de pas angulaires, est au moins égale à un cycle de commande complet d'un angle vectoriel (WZ) de 360°.

4. Procédé selon la revendication 1, caractérisé par le fait que, lors de chaque intervalle :
- un pas angulaire et des paramètres de plage associés (BA, BAK) sont lus,
- une valeur actuelle (WZI), exprimée comme la somme de tous les pas angulaires (WS) lus à partir du début du processus et un écart (WZA) par rapport à une consigne, sont formés comme la différence entre cette valeur actuelle (WZI) et une valeur de consigne (WZS),
- par le fait que par l'intermédiaire des paramètres de plage, deux plages au moins, à savoir une plage d'incrémentation (1) et une plage de décrémentation (2) sont définies, et
- par le fait qu'il est examiné, dans laquelle de ces plages se trouve l'écart (WZA) par rapport à la consigne et qu'en correspondance avec le résultat est lu un pas angulaire plus grand ou plus petit, comparé au pas angulaire actuel, dans la table d'angles.

5. Procédé selon la revendication 4, caractérisé par le fait que l'angle vectoriel (WZ) du vecteur de consigne (ZS) est ajusté directement - sans commande par l'intermédiaire de la table d'angles - à la valeur de consigne (WZS) aussitôt que, dans un intervalle, l'écart (WZA) par rapport à la consigne et le pas angulaire (WS) sont plus petits que des valeurs limites associées.

6. Procédé selon la revendication 4, caractérisé par le fait qu'entre la plage d'incrémentation (1) et la plage de décrémentation (2), se trouve une plage de correction (3) et par le fait que le même pas angulaire est lu de nouveau lorsque l'écart (WZA) par rapport à la consigne se trouve dans la plage de correction (3).

7. Procédé selon la revendication 6, caractérisé par le fait que l'horloge du système et l'intervalle sont constants.

8. Procédé selon la revendication 7, caractérisé par le fait que les pas angulaires (WS) sont attribués successivement à des adresses (TA) déterminées par un pointeur d'adresses (TZ) de telle manière que leurs valeurs commençant à la valeur de début sous une adresse de début (TAS) augmentent jusqu'à la valeur de fin sous une adresse de fin (TAE), par le fait qu'à chaque pointeur d'adresses (TZ) sont affectées une distance de commutation (BA) et une largeur de correction (BAK) sous forme de paramètres de plage, qu'à chaque intervalle sont lues les valeurs déterminées par l'intermédiaire des pointeurs d'adresses, qu'il est déterminé si l'écart (WZA) par rapport à la consigne est plus petit que la distance de commutation (BA) ou plus grand que la somme de la distance de commutation (BA) et de la largeur de correction (BAK) ou est situé entre ces valeurs et que le pointeur d'adresses est respectivement incrémenté, décrémenté ou reste inchangé en fonction du résultat.

9. Procédé selon la revendication 8, caractérisé par le fait qu'il est prévu pour chaque sens de rotation au moins une table d'angles et par le fait que le pas angulaires (WS) se distinguent pour des sens de rotation différents par l'intermédiaire de leur signe.

10. Procédé selon la revendication 9, caractérisé par le fait que la même table d'angles (T) est lue pas à pas dans des sens opposés, en régime d'accélération et en régime de freinage.

11. Procédé selon la revendication 10, caractérisé par le fait que deux tables d'angles applicables aux sens de rotation différents forment une table générale dans laquelle les adresses augmentent de l'adresse de début jusqu'à l'adresse de fin pour le premier sens et diminuent dans le sens de la valeur de fin pour l'autre sens.

12. Procédé selon la revendication 11, dans lequel un ressort assiste le moteur pas à pas dans un premier sens de rotation, caractérisé par le fait que le pointeur d'adresses saute une adresse au moins, lorsque l'écart par rapport à la consigne se trouve dans une plage (2) dans laquelle existe un régime d'accélération ou de freinage assisté par le ressort.

13. Procédé selon la revendication 8, caractérisé par le fait que l'on calcule une courbe de consigne de freinage (KBS), qui parvient à la position de consigne (B) avec une vitesse nulle et est déterminée par l'intermédiaire de points de freinage (PKBS) ayant une distance de freinage (BAS) par rapport à la position de consigne (B), et par le fait qu'une courbe de commutation (KS) est dérivée de la courbe de consigne de freinage (KBS), la courbe de commutation étant déterminée par des points de commutation (PKS), dont chacun présente, pour une vitesse de commutation (ZGA), une distance de commutation (BA) par rapport à la position de consigne (B).

14. Procédé selon la revendication 13, caractérisé par le fait qu'entre chacun des points de freinage (PKBS) de la courbe de consigne de freinage (KBS) et les limites (KSG ; KS') de la plage de correction (3) qui leur sont le plus proche se trouve une distance de redressement (BAS) qui est au moins égale aux pas angulaires correspondant à la vitesse de pas (ZGS) respective.

15. Procédé selon la revendication 14 caractérisé par le fait que la largeur de correction (BAK) de la plage de correction (3) pour chaque vitesse de pas est égale à la différence de la somme de la distance de redressement (BAS) et de la distance de freinage (BAB) dans le cas de la vitesse de pas plus élevée suivante et de la vitesse de pas actuelle.

16. Procédé selon la revendication 15, caractérisé par le fait que la distance de commutation (BA) dans le cas de chaque vitesse de pas est égale à la somme de la distance de freinage (BAB), de la distance de redressement (BAS) et de la largeur de correction (BAK).

17. Procédé selon la revendication 1, caractérisé par le fait qu'au moteur pas à pas (S) est connecté un dispositif de dosage d'un moteur à combustion interne et par le fait que la position de consigne (B) est déterminée par l'intermédiaire d'un capteur de pédale (PW).

18. Procédé selon la revendication 17, caractérisé par le fait que plusieurs tables d'accélération (TS) et tables de freinage (TB) sont mémorisées pour des courbes d'accélération et de freinage à pentes différentes et par le fait que l'une de ces tables est respectivement activée en fonction de paramètres de fonctionnement du moteur à combustion interne.

19. Procédé selon la revendication 17, caractérisé par le fait que le pas angulaire (WS) maximal est fonction de paramètres du moteur à combustion interne.

20. Procédé selon la revendication 17, caractérisé par le fait que le dispositif de dosage est un régulateur de volet à papillon et par le fait que le volet à papillon est monté directement sur l'arbre prolongé du rotor (SR).
